# EUROPÄISCHE PATENTSCHRIFT

(11) **EP 3 754 244 B1**
(45) Veröffentlichungstag und Bekanntmachung des Hinweises auf die Patenterteilung: **11.10.2023**
(21) Anmeldenummer: 20181266.6
(22) Anmeldetag: 19.06.2020
(51) Int. Cl.: F16P 3/14

(54) **VORRICHTUNG UND VERFAHREN ZUR ÜBERWACHUNG EINES GEFAHRENBEREICHS**
DEVICE AND METHOD FOR MONITORING A HAZARDOUS AREA
DISPOSITIF ET PROCÉDÉ DE SURVEILLANCE D'UNE ZONE DANGEREUSE

(30) Priorität: 21.06.2019 DE 102019116806
(43) Veröffentlichungstag der Anmeldung: 23.12.2020
(73) Patentinhaber: Wilhelm Bahmüller Maschinenbau-Präzisionswerkzeuge GmbH, 73655 Plüderhausen (DE)
(72) Erfinder: Hermann, Sascha, 73463 Westhausen (DE); Undeutsch, Jan, 71522 Backnang (DE)
(74) Vertreter: DREISS Patentanwälte PartG mbB

(56) Entgegenhaltungen:
- EP-A1- 1 803 989
- EP-A2- 1 329 662
- US-A1- 2010 194 583

## Beschreibung

Die Erfindung betrifft eine Vorrichtung und ein Verfahren, mit deren Hilfe es möglich ist, einen für Menschen potentiell gefährlichen Bereich so zu überwachen, dass das Betreten dieses Bereichs durch einen Menschen sicher erkannt wird. Beispiele für solche Bereiche (nachfolgend als Gefährdungsbereich bezeichnet) sind Produktionsanlagen mit bewegten Teilen oder der Arbeitsraum eines Industrieroboters. Immer dort wo Maschinen, Industrieroboter oder andere Geräte Bewegungen ausführen, muss der (unbefugte) Zutritt von Personen in den Gefährdungsbereich zuverlässig erkannt werden, so dass die Maschine, der Industrieroboter oder das Gerät stillgesetzt werden können. Damit werden eine Gefährdung und eine Verletzung der in den Gefährdungsbereich eingedrungenen Person wirksam verhindert.

Um die Gefährdung von Personen in der Nähe von Maschinen auszuschließen, wurde als gesetzliches Regelwerk in Europa die sogenannte "Maschinenrichtlinie" geschaffen. Sie enthält detaillierte Vorgaben, wie die Gefährdung von Personen durch Maschinen ausgeschlossen werden muss. So werden zum Beispiel an Rotations-Laserscanner bestimmte Anforderungen gestellt. Nur wenn diese Bedingungen erfüllt sind, sind die Rotations-Laserscanner und deren Ergebnisse "sicher" im Sinne der Maschinenrichtlinie und können für die Überwachung eines Gefahrenbereichs genutzt werden.

Des Weiteren müssen die Auswertealgorithmen des Laserscanners vor Störungen geschützt sein, die durch Schnittstellen zu anderen Programmteilen auftreten können.

Eine weitere Vorgabe bzw. Empfehlung der EN-ISO 13855 betrifft die Aufrasterung der Strahlabstände. Konkret bedeutet das, dass zwischen einem Produkt und einer Schutzeinrichtung, wie z.B. einem Schutzgitter, in horizontaler Richtung (das ist die Y-Achse in der anhängigen Anmeldung) ein Rastermaß von maximal 230 mm nicht überschritten werden soll. In vertikaler Richtung soll das Rastermaß 300 mm nicht überschreiten.

Dies führt im Ergebnis dazu, dass man gedanklich einen zu überwachenden Bereich in ein Raster unterteilen kann, wobei die vertikal verlaufenden Rasterlinien parallel zueinander sind und einen Abstand von z. B. 230 mm haben. Die horizontal verlaufenden Rasterlinien haben in vertikaler Richtung einen Abstand von z. B. 300 mm.

Ein Gefährdungsbereich kann am einfachsten durch eine Einhausung gegen das Eindringen von Personen geschützt werden. Wenn die Einhausung eine mit einem Taster versehene Tür aufweist, dann kann das Öffnen der Tür durch den Taster einfach detektiert werden. Wenn bei geöffneter Tür die Stromversorgung der Maschine unterbrochen wird, dann ist ein sehr einfacher und effektiver Schutz von Personen gewährleistet. Diese Art der Zugangskontrolle ist dann besonders effektiv, wenn während der Produktion oder Bearbeitung keine Produkte aus dem Gefährdungsbereich in die Umgebung gelangen.

Schwieriger wird es, wenn während des regulären Betriebs der Maschine oder des Industrieroboters in zeitlichen Abständen oder kontinuierlich fertige Produkte die Maschine verlassen und aus dem Gefährdungsbereich herausgefördert werden sollen. Dann sind starre Einhausungen und mit Tastern versehene Türen ungeeignet. Es ist relativ einfach, eine Öffnung des Gefährdungsbereichs mittels eines Lasersensors und einer Auswerteeinheit oder mit Hilfe von einer oder mehreren Lichtschranken in den Zeiten zu überwachen in denen sich kein Produkt in der Öffnung des Gefährdungsbereichs befindet. Schwierig ist die Überwachung in den Zeiten in denen ein Produkt durch die Öffnung aus dem Gefährdungsbereich hinausgefördert wird.

Aus dem Stand der Technik ist eine Vielzahl von Überwachungsvorrichtungen bekannt, die sich grob in drei Gruppen einteilen lassen.

Die erste Gruppe erfasst den Überwachungsbereich in erster Linie mit Hilfe von Lichtschranken. Dazu gehören die DE 10 2008 004 941 A1 und die EP 1 089 030 A2.

Die zweite Gruppe erfasst den Überwachungsbereich in erster Linie mit Hilfe von Kameras. Dazu gehört die DE 10 2004 043 515 A1.

Die dritte Gruppe erfasst den Überwachungsbereich in erster Linie mit Hilfe von Lasern. Die beanspruchte Erfindung ist der dritten Gruppe zuzuordnen. Ebenfalls dieser Gruppe zuzuordnen sind die DE 20 2017 103 399 U1, die DE 20 2017 102 922 U1 und die DE 10 2017 108 531 A1.

Die DE 20 2017 102 922 U1 benötigt mindestens zwei Laser 18a 24 sowie einen weiteren opto-elektronischen Sensor 18b. Der Laser 18a erfasst einen kegelförmigen Raum. Mit Hilfe des Lasers 24 werden die Positionen der Räder eines Gabelstaplers erfasst. Der weitere optoelektronische Sensor 18b überwacht den eigentlichen Überwachungsbereich. Wegen der Zahl der Sensoren und deren sehr verschiedenen Funktionen, ist diese Überwachungsvorrichtung relativ teuer und komplex. Außerdem ist sie nicht sehr flexibel.

Die DE 20 2017 103 399 U1 und die DE 10 2017 108 531 A1 arbeiten mit zwei Lasern, die jeweils Teil-Bereiche einer Ebene überwachen. Aus der EP 1 329 662 A2 und der der EP 1 803 989 A1 sind fotoelektrische Sicherheitsbarrieren bekannt, bei denen zwei Lichtschranken so angeordnet sind, dass sie zwei Ebenen aufspannen, die senkrecht zueinander angeordnet sind. Dadurch kann das Vorhandensein eines Gegenstands in einem Gefährdungsbereich detektiert werden. Die Abmessungen des Gegenstands können nicht erfasst werden.

Der Erfindung liegt die Aufgabe zu Grunde, eine Schutzeinrichtung und ein Verfahren zum Betreiben einer solchen Schutzeinrichtung bereitzustellen, die es ermöglichen, während des Betriebs Produkte aus dem Gefährdungsbereich zu befördern und gleichzeitig sicherzustellen, dass auch in diesem Moment, keine Person von außen in den Gefährdungsbereich eindringen kann. Die Schutzeinrichtung und das Verfahren sollen flexibel einsetzbar sein, auch wenn sich die Abmessungen der Produkte, welche aus dem Gefährdungsbereich gefördert werden, häufig ändern.

Die Erfindung ist für die unterschiedlichsten Einsatzgebiete geeignet. Zur Erläuterung der Erfindung dient nachfolgend ein Beispiel aus der Verpackungsmittelindustrie: In einer Produktionsstraße werden verschiedene Faltschachtelzuschnitte in einem mehrstufigen Prozess zugeschnitten, gerillt, gefaltet und verleimt. Anschließend werden mehrere Faltschachtelzuschnitte auf eine Palette zu einem Stapel übereinandergelegt und dann aus der Produktionsstraße befördert. Bei diesem Beispiel, ist die Palette mit dem darauf befindlichen Stapel von Faltschachtelzuschnitten das "Produkt", welches den offenen Bereich passiert.

Aufgrund der hohen Produktivität moderner Produktionsstraßen verlässt in kurzen Zeitabständen (einige Sekunden bis hin zu wenigen Minuten) eine Palette mit darauf befindlichen Faltschachtelzuschnitten den Gefährdungsbereich. Aufgrund der großen Verletzungsgefahr darf auf keinen Fall eine Person während des Betriebs der Anlage in den Gefährdungsbereich gelangen. Dort bewegen sich Maschinenteile schnell und mit großer Kraft und stellen eine Gefahr für Leib und Leben dar.

Eine zusätzliche Schwierigkeit bei der Überwachung bzw. der Zugangskontrolle des Gefährdungsbereichs im laufenden Betrieb besteht darin, dass diese Maschinen verschieden große Faltschachtelzuschnitte bearbeiten können. Infolgedessen ändern sich die Abmessungen der Stapel, welche den Gefährdungsbereich verlassen. Eine "starre" Zugangskontrolle, beispielsweise durch eine Aussparung in einem Absperrgitter, die in etwa der Außenkontur des Stapels entspricht, ist nicht flexibel genug und daher ungeeignet.

Diese Aufgabe wird erfindungsgemäß gelöst durch eine Vorrichtung zur Überwachung eines offenen Bereichs mit den Merkmalen des Vorrichtungs-Anspruchs 1 und des nebengeordneten Verfahrens-Anspruchs 8.

Durch die erfindungsgemäße Anordnung des ersten und des zweiten Lasers, können beide Seiten eines Produkts, welches den offenen Bereich verlässt, überwacht werden. Dadurch wird sichergestellt, dass keine Person über den offenen Bereich in den Gefährdungsbereich gelangt, während zeitgleich ein Produkt den Gefährdungsbereich in entgegengesetzter Richtung verlässt. Durch die zueinander orthogonale Ausrichtung der von dem ersten Laser und dem zweiten Laser überwachten Ebenen, wird die Überwachung besonders effektiv.

Um die Abmessungen des Produkts und die daraus resultierenden Schutzbereiche auf einfache Weise ermitteln zu können, ist vorgesehen, dass die erfindungsgemäße Vorrichtung eine Schnittstelle zu einer Produktionseinrichtung und/oder zu einer externen Messeinrichtung hat. Dann können die Abmessungen des Produkts von der Produktionseinrichtung oder, der externen Messeinrichtung an die erfindungsgemäße Vorrichtung übertragen werden. Aus den Abmessungen des Produkts sowie den horizontalen und vertikalen Rasterlinien der erfindungsgemäßen Vorrichtung lässt sich effektiv, normenkonform und mit einer geringen Datenmenge der offene Bereich überwachen, selbst wenn die Abmessungen der den offenen Bereich passierenden Produkte sich häufig ändern.

In vorteilhafter Ausgestaltung der Erfindung weist sie eine oder mehrere, bevorzugt in Förderrichtung hintereinander angeordnete Lichtschranken auf, welche die Laser unterstützen und ergänzen.

Die Erfindung betrifft auch ein Verfahren zur Überwachung eines offenen Bereichs mit Hilfe eines ersten Lasers und eines zweiten Lasers, wobei die Laser an gegenüberliegenden Enden des offenen Bereichs angeordnet sind, , wobei der erste Laser einen Bereich einer ersten Ebene überwacht, wobei die erste Ebene parallel zu dem offenen Bereich verläuft, wobei der zweite Laser so ausgerichtet und eingestellt ist, dass er einen Bereich einer zweiten Ebene überwacht, und wobei die zweite Ebene orthogonal zu der ersten Ebene verläuft, und wobei das Verfahren folgende Verfahrensschritte umfasst:
Unterteilen der ersten Ebene in ein Raster mit vertikalen und horizontalen Rasterlinien,
Unterteilen der zweiten Ebene in ein Raster mit horizontalen Rasterlinien, wobei die horizontalen Rasterlinien orthogonal zu dem offenen Bereich verlaufen,
Ermitteln jeweils eines Schutzbereichs für den ersten und den zweiten Laser in Abhängigkeit der Produktabmessungen eines Produkts, das den offenen Bereich passiert,
Ermitteln, ob eine Verletzung mindestens eines Schutzbereichs vorliegt, und
Auslösen der Sicherheitskette "Stopp", wenn eine Schutzbereichs-Verletzung vorliegt.

Das Auslösen der Sicherheitskette "Stopp" beinhaltet zum Beispiel das Anhalten der Produktionsmaschine, so dass von ihr keine Gefährdung mehr ausgeht. Es kann auch die Ausgabe eines Alarmsignals (visuell und/oder akustisch) beinhalten.

Dadurch, dass die Laser nicht einen Bereich einer Ebenen überwachen, sondern erfassen, ob sich an den durch die Raster vorgegebenen (Raster-)Linien ein Körper oder ein Gegenstand befindet, wird die zur Überwachung des offenen Bereichs benötigte Datenmenge stark verringert, ohne Einbußen bei der Qualität und Zuverlässigkeit der Überwachung.

Wegen der verringerten Datenmenge, läuft das Verfahren stabiler und stellt geringere Anforderungen an die Hardware. Schließlich resultiert daraus noch ein weiterer Vorteil: Die Überwachung des offenen Bereichs ist sehr flexibel und kann ohne weiteres an verschiedene Produktabmessungen adaptiert werden. Auch kann das erfindungsgemäße Verfahren ohne Weiteres an sich ändernde Vorgaben adaptiert werden. Wenn eine engmaschige Überwachung gefordert oder gewünscht wird, muss nur der Abstand der Rasterlinien voneinander verringert werden. Das ist sehr einfach über ein Eingabegerät, wie zum Beispiel eine Tastatur, möglich, da der Abstand der Rasterlinien ein Parameter des erfindungsgemäßen Verfahrens ist. Die Änderung des Abstands verursacht keine Änderung im Ablauf des erfindungsgemäßen Verfahrens.

Bei den aus dem Stand der Technik bekannten laserbasierten Verfahren, muss letztendlich ein genaues Bild des Produkts hinterlegt sein. Die Überwachung des offenen Bereichs erfolgt durch einen Vergleich der Kontur des Produkts mit den von dem oder den Laserscannern erfassten vielen Messpunkten.

Die erfindungsgemäße Überprüfung, ob sich an den durch die Rasterlinien definierten Orten, ein Gegenstand befindet, ist softwaretechnisch sehr viel einfacher realisierbar als der aus dem Stand der Technik bekannte Vergleich der abgespeicherten Kontur des Produkts mit den von dem oder den Laserscannern erfassten vielen Messpunkten. Das verursacht Probleme, wenn sich die Abmessungen des Produkts häufig ändern und stellt hohe Anforderungen an die Hardware.

In vorteilhafter Ergänzung wird auch überwacht, ob das Produkt innerhalb vorgegebener Grenzen die Schutzbereiche passiert und andernfalls die Sicherheitskette "Stopp" ausgelöst wird.

Weitere Vorteile und vorteilhafte Ausgestaltungen der Erfindung sind den Zeichnungen und deren Beschreibungen entnehmbar.

### Zeichnung

Es zeigen:
- Figur 1: eine Ansicht von oben eines Gefährdungsbereichs am Ende einer Produktionseinrichtung,
- Figur 2: eine schematische Darstellung der zu überwachenden Austrittsfläche aus dem Gefährdungsbereich in einer Ansicht von hinten,
- Figur 3: eine Ansicht von oben auf den Gefährdungsbereich,
- Figur 4: eine ähnliche Ansicht wie die Figur 1 und
- Figuren 5 bis 7: eine Illustration des Ausschleusens eines Produkts durch die erfindungsgemäße Vorrichtung,

### Beschreibung der Ausführungsbeispiele

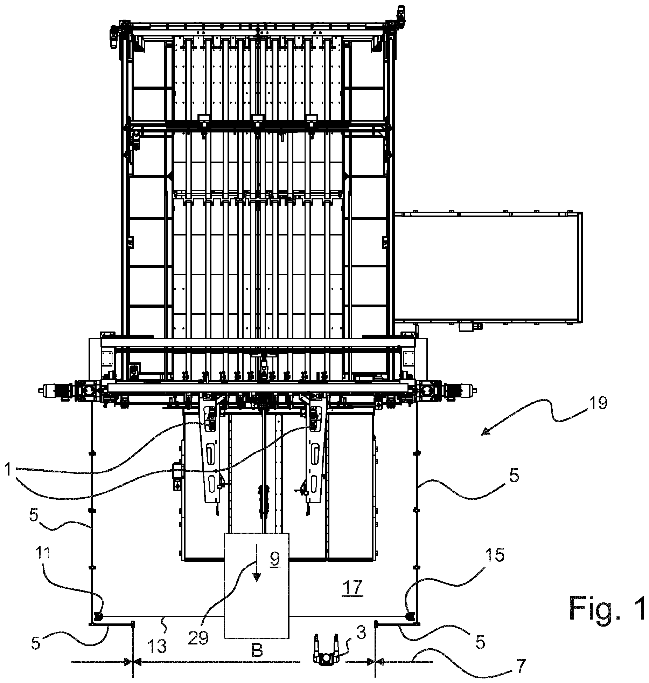

In der Figur 1 ist beispielhaft und stark vereinfacht das Ende einer Produktionsanlage zur Bearbeitung von Faltschachtelzuschnitten dargestellt. Dort gibt es mehrere sich bewegende Maschinenteile 1, die eine Person 3, wenn sie in den Bewegungsbereich dieser Maschinenteile 1 gelangt, verletzen könnten. Daher ist es während des Betriebs der Produktionsanlage unbedingt zu verhindern, dass eine Person 3 in einen Gefährdungsbereich 19 am Ende der Produktionsanlage gelangen kann. Der Gefährdungsbereich 19 schließt an das Ende der Produktionsstraße an und umfasst in jedem Fall den Bewegungsbereich der sich bewegenden Maschinenteile 1.

An den Seiten ist der Gefährdungsbereich 19 durch Schutzgitter 5 von der Umgebung abgetrennt. An dem hinteren Ende des Gefährdungsbereichs 19 sind zwei weitere Schutzgitter 5 vorhanden. Zwischen den Schutzgittern 5 am hinteren Ende des Gefährdungsbereichs 19 erstreckt sich ein offener Bereich 7 mit einer Breite B. Durch den offenen Bereich 7 werden Produkte 9, wie zum Beispiel die bereits erwähnte Palette mit einem Stapel Faltschachtelzuschnitten, aus dem Gefährdungsbereich 19 herausgefördert. Daher ist in dem offenen Bereich 7 kein Schutzgitter 5 vorhanden, welches den Gefährdungsbereich 19 von der Umgebung trennt.

Die Überwachung des offenen Bereichs 7 erfolgt mit Hilfe von zwei Rotations-Laserscannern (nachfolgend als "Laser" bezeichnet). In der Figur 1 ist am linken Ende des Gefährdungsbereichs 7 ein erster Laser 11 eingezeichnet. Dieser erste Laser 11 überstreicht mit seinen Laserstrahlen eine vertikal verlaufende Ebene 13, die sich über den offenen Bereich 7 erstreckt; daher wird der erste Laser 11 auch als Vertikallaser bezeichnet. Die Vertikalebene 13 ist keine physische Barriere, sondern eine geometrische Ebene, die sich senkrecht zur Zeichnungsebene erstreckt.

Das "Blickfeld" des ersten Lasers 11 umfasst den Bereich links des Produkts 9. Außerdem umfasst es den Bereich oberhalb des Produkts 9. In diesen Teilbereichen des offenen Bereichs 7 kann der erste Laser 11 Personen und/oder Gegenstände erkennen und von dem Produkt 9 unterscheiden. Dazu später mehr.

Der in Figur 1 rechts des Produkts 9 befindliche Teilbereich kann von dem ersten Laser 11 nicht überwacht werden, da dieser Teilbereich aus der Perspektive des ersten Lasers 11 von dem Produkt 9 verdeckt wird, wenn das Produkt den Gefährdungsbereich 19 verlässt. Dieser Teilbereich ist ein "blinder Bereich " des ersten Lasers 11. Wenn nur der erste Laser 11 vorhanden ist, könnte eine Person 3, unbemerkt von dem ersten Laser 11 den offenen Bereich 7 passieren und in den Gefährdungsbereich 19 gelangen, während das Produkt 9 aus dem Gefährdungsbereich 19 in die Umgebung befördert wird und die vertikale Ebene 13 durchdringt. Dazu müsste sich die Person 3 so weit bücken, dass sie - aus der Perspektive des ersten Lasers 11 - von dem Produkt 9 verdeckt wird.

Diese Situation wäre nicht akzeptabel. Daher ist erfindungsgemäß an der dem ersten Laser 11 gegenüberliegenden Seite des offenen Bereichs 7 ein zweiter Rotations-Laserscanner 15 angeordnet. Der zweite Laser 15 ist bei diesem Ausführungsbeispiel so ausgerichtet, dass er eine horizontale Ebene 17 erfasst. Daher wird dieser zweite Laser 15 auch als Horizontallaser bezeichnet. Die horizontale Ebene 17 ist, wie die Vertikalebene 13 auch, keine physische Barriere, sondern eine geometrische Ebene.

Wenn die Laser 11, 15 nicht aktiv sind, dann könnte die Person 3 unbemerkt den offenen Bereich 7 passieren und in den Gefährdungsbereich 19 gelangen und wäre dort in großer Gefahr.

Die Laser 11 und 15 genügen den Anforderungen der Maschinenrichtlinie, der EN-ISO 13855 bzw. den jeweils gültigen gesetzlichen Vorschriften am Einsatzort.

Die Erfindung ist nicht darauf beschränkt, dass der erste Laser 11 eine Vertikalebene 13 abscannt bzw. überwacht und der zweite Laser 15 eine Horizontalebene 17 abscannt bzw. überwacht. Es sind auch Konstellationen möglich bei denen beide Laser 11, 15 eine Vertikalebene oder eine Horizontalebene überwachen.

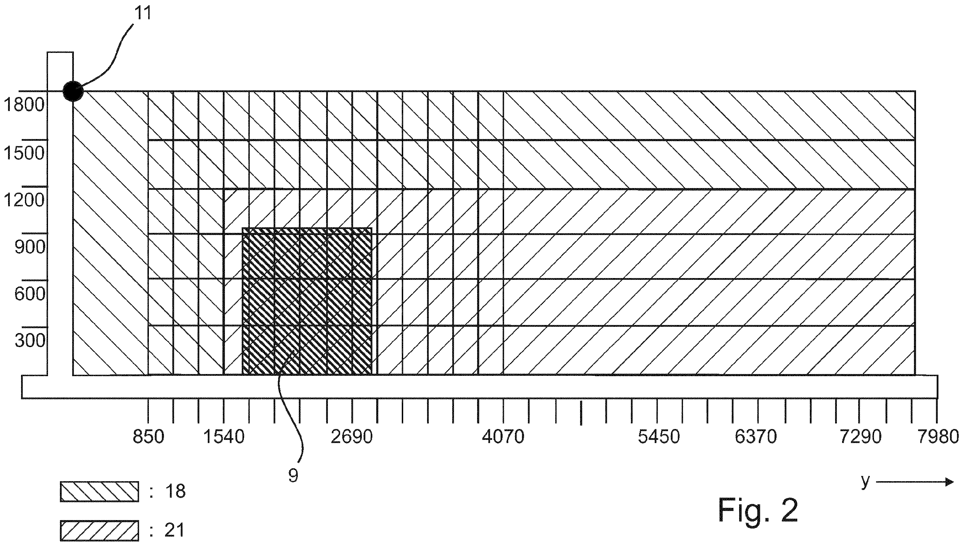

Anhand der Figuren 2 bis 7 wird das zuvor Geschilderte in verschiedenen Ansichten dargestellt und nachfolgend im Detail erläutert.

In der Figur 2 ist der offene Bereich 7 in einer Ansicht von hinten dargestellt. Am linken Ende des offenen Bereichs 7 ist der erste Laser 11 dargestellt. Die in der Figur 1 rechte Grenze des offenen Bereichs 7 (mit dem zweiten Laser 15) ist in der Figur 2 nicht dargestellt.

Die von dem ersten Laser 15 erfasste vertikale Ebene 13 wurde mit einem Raster versehen. Das Rastermaß stammt aus der Maschinenrichtlinie bzw. der EN-ISO 13855; sie schreibt vor, dass zwischen dem Produkt und der Schutzeinrichtung in Richtung der horizontal verlaufenden Y-Achse eine Lücke von maximal 230 mm verbleiben darf. Das bedeutet zum Beispiel, dass zwischen dem Produkt und einem Schutzgitter in horizontaler Richtung eine Lücke von maximal 230 mm vorhanden sein darf. In dem Bereich Y = 0 bis Y = 850 mm ist ein in der Figur 1 dargestelltes Schutzgitter 5 vorgesehen, das in der Figur 2 aus Gründen der Übersichtlichkeit nicht dargestellt ist. Da in dem offenen Bereich 7 kein Schutzgitter vorhanden ist, wurden die Empfehlungen der EN-ISO 13855 bei diesem Ausführungsbeispiel in ein Raster mit den Abmessungen 230 mm x 300 mm umgesetzt.

Der erste Laser 11 ist bei diesem Ausführungsbeispiel auf einer Höhe von etwa 1,8 Metern (1.800 mm) über dem Förderband angeordnet, welches die Palette mit Faltschachtelzuschnitten aus dem Schutzbereich 19 transportiert. Diese Höhe ist bei diesem Ausführungsbeispiel auch der obere Rand des vom ersten Laser 11 überwachten offenen Bereichs 7. Es ist in der Praxis nicht erforderlich, höher gelegene Teile des offenen Bereichs 7 zu überwachen.

In der Figur 2 ist die Außenkontur des Produkts 9 eingezeichnet. Sie teilt den überwachten Teil des offenen Bereichs 7, wie bereits oben erläutert, in zwei Teilbereiche: Ein erster Teilbereich (siehe die erste Schraffur 18) umfasst die für den ersten Laser 11 sichtbaren Felder des Rasters der vertikale Ebene 13.

Der in Figur 2 rechts neben dem Produkt 9 gelegene Bereich der vertikalen Ebene 13 ist aus der Perspektive des ersten Lasers 11 ein "blinder Bereich". Er wird durch eine zweite Schraffur 21 angedeutet. Es ist also möglich, dass eine Person (nicht dargestellt in Figur 2) sich bückt und in dem für den ersten Laser 11 blinden Bereich 21 unerkannt vom ersten Laser 11 in den Gefährdungsbereich 19 gelangt.

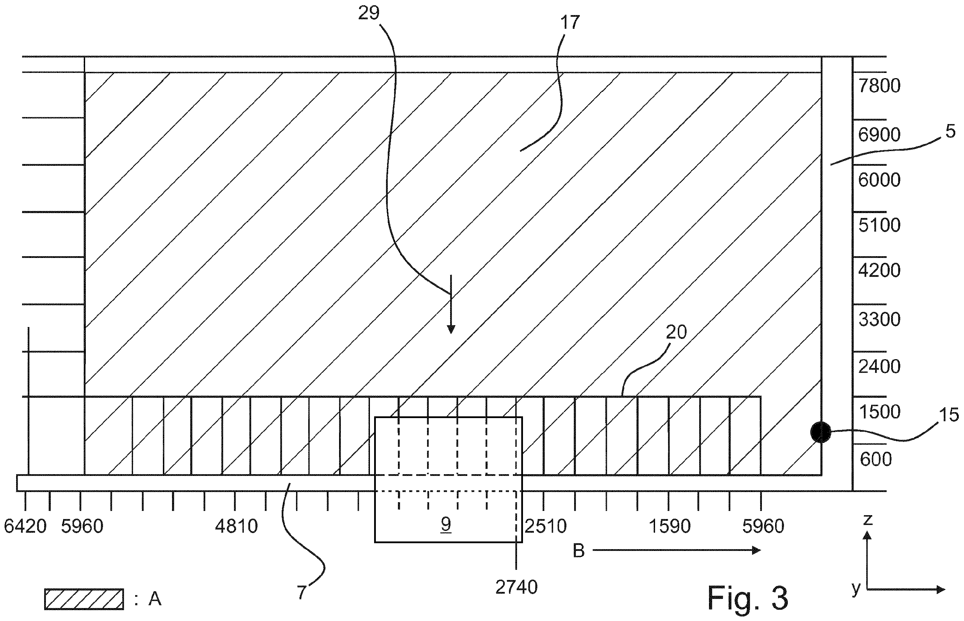

Dies wird erfindungsgemäß durch den zweiten Laser 15, den sogenannten Horizontallaser, verhindert. Der zweite Laser 15 ist auf der dem ersten Laser 11 gegenüberliegenden Seite des offenen Bereichs 7 angeordnet. In der Figur 3 ist eine Draufsicht auf einen Teil des Gefährdungsbereichs 19 dargestellt.

Der vom horizontal ausgerichteten zweiten Laser 15 erfasste Bereich erstreckt sich bis zu der dem zweiten Laser 15 gegenüberliegenden Seite des Gefährdungsbereichs 19.

Von besonderer Bedeutung ist der rechteckige Bereich 20. Dieser rechteckige Bereich 20 verläuft parallel zu der vertikalen Ebene 13 des ersten Lasers 11 (nicht dargestellt in Figur 3). Innerhalb des Bereichs 20 ist in horizontaler Richtung ein Raster mit einem Rastermaß von 230 mm angedeutet.

Der "blinde Bereich 25" des zweiten Lasers befindet sich in der Figur 3 links von dem Produkt 9.

Der zweite Laser 15 ist, beispielsweise auf einer Höhe von 300 mm bis 900 mm, bevorzugt aber in einem Bereich von 200 mm bis 600 mm über dem Förderband angeordnet. In der gleichen Höhe verläuft die horizontale Ebene 17, die von dem zweiten Laser 15 überstrichen wird.

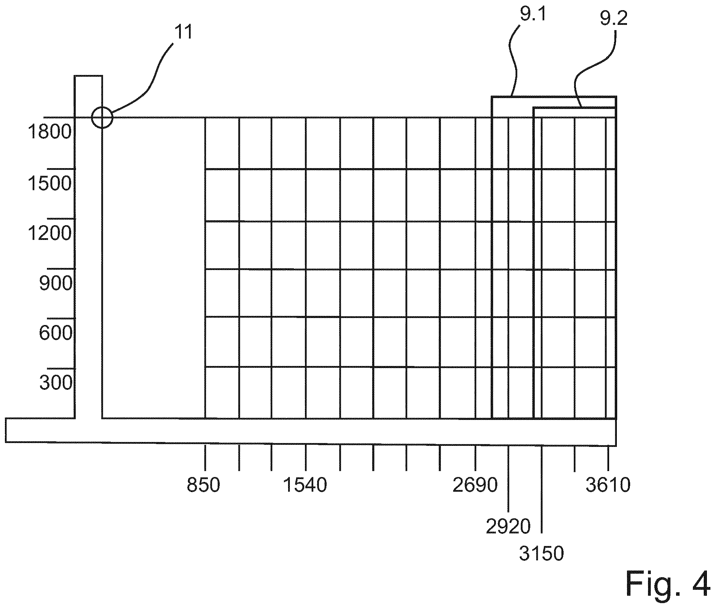

Anhand der Figur 4 wird die erfindungsgemäße Überwachung des offenen Bereichs 7 durch den ersten Laser 11 veranschaulicht und erläutert. Der zweite Laser 15 arbeitet entsprechend, nur in der horizontalen Ebene 17.

Die Laser 11 und 15 sind mit einer nicht dargestellten Einrichtung zur Überwachung des offenen Bereichs 7 (nachfolgend "Überwachungseinrichtung") leitungsgebunden oder drahtlos gekoppelt. Die Überwachungseinrichtung ist in der Regel ein Rechner oder Mikroprozessor, der die von den Lasern 11, 15 erfassten Ausgangsdaten und Daten aus anderen Quellen, wie zum Beispiel die Abmessungen des Produkts 9, auswertet und berücksichtigt.

Der Überwachungseinrichtung stehen als Eingangsinformationen die Hauptabmessungen (Breite, Höhe und erforderlichenfalls auch die Länge) des Produkts 9.1 zur Verfügung. Diese Abmessungen können auf verschiedenen Weisen ermittelt werden.

Die Abmessungen des Produkts 9 können über eine Schnittstelle von einer Steuerung der vorgelagerten Produktionsmaschine exportiert werden. Sie können aber auch gemessen werden. So können mit Hilfe des Horizontalllasers 15 Länge und Breite des Produkts 9 erfasst werden, sobald sich das Produkt 9 in der vom zweiten Laser 15 überwachten horizontalen Ebene 17 befindet und noch bevor es den offenen Bereich 7 erreicht hat.

In der Figur 4 sind zwei verschiedene Konturen des Produkts 9 eingetragen (siehe die Bezugszeichen 9.1 und 9.2) anhand derer das erfindungsgemäße Verfahren erläutert wird. Zur Vereinfachung sind bei diesem Beispiel die Produkte 9.1 und 9.2 höher als 1,8 Meter, so dass sie über den überwachten Bereich 19 hinausragen.

In der Figur 4 ist die "korrekte" Kontur des Produkts 9 mit dem Bezugszeichen 9.1 versehen worden. "Korrekt" bedeutet, dass die tatsächliche Kontur des Produkts 9 innerhalb der Rasterfelder liegt in denen sie zu erwarten ist, wenn man die bekannten Hauptabmessungen des Produkts 9 zu Grunde legt.

Basierend auf den bekannten Hauptabmessungen des Produkts 9 hat die erfindungsgemäße Überwachungseinrichtung berechnet, dass die Seitenwand des Produkts 9 die Vertikalebene 13 in dem Rasterfeld zwischen Y = 2690 mm und Y = 2920 mm passiert. Das ist bei der mit 9.1 bezeichneten "korrekten" Kontur der Fall.

In einer Plausibilitätsprüfung wird geprüft, ob in dem Rasterfeld zwischen Y = 2690 mm und Y = 2920 mm vom ersten Laser 11 ein Gegenstand, nämlich das Produkt 9.1, erkannt wird. Wenn das der Fall ist, ist das Ergebnis der Plausibilitätsprüfung wie erwartet, d. h. positiv.

Wenn innerhalb dieses Rasterfelds kein Gegenstand erkannt wird, dann ist etwas nicht in Ordnung und das Ergebnis der Plausibilitätsprüfung ist negativ.

Wenn der erste Laser 11 zeitgleich mit der "korrekten" Außenkontur 9.1 in dem Bereich Y = 850 mm bis Y = 2690 mm ein Objekt erfasst, dann ist das Ergebnis der Plausibilitätsprüfung ebenfalls negativ. Dabei ist es unerheblich, ob das vom Laser 1 erfasste Objekt eine Person, ein Gegenstand oder das Produkt 9 ist, das unbeabsichtigter Weise auf dem Förderband in Richtung des ersten Lasers 11 verrutscht ist.

Ein negatives Ergebnis der Plausibilitätsprüfung stellt sich auch dann ein, wenn die Seitenwand des Produkts 9 die Vertikalebene 13 zu weit rechts (d. h. bei Y > 2920 mm) passiert. In der Figur 4 ist auch diese Situation dargestellt.

"Zu weit rechts" bedeutet, dass die Seitenwand des Produkts 9 die Vertikalebene 13 nicht in dem von der Überwachungseinrichtung vorausberechneten Rasterfeld (Y = 2690 mm bis Y = 2920 mm) passiert. Diese Situation kann zum Beispiel dadurch entstehen, dass das Produkt auf dem Förderband in Richtung des zweiten Lasers 15 (nach rechts in Figur 4) verrutscht ist. Diese "nicht korrekte" Außenkontur ist in der Figur 4 mit dem Bezugszeichen 9.2 gekennzeichnet.

In dem dargestellten Beispiel befindet passiert die Seitenwand des "nicht korrekten" Produkts die Vertikalebene 13 in dem Rasterfeld zwischen Y = 2920 mm und Y = 3150 mm (siehe die Außenkontur 9.2) und das Ergebnis der Plausibilitätsprüfung ist ebenfalls negativ.

Bei einem negativen Ergebnis wird die Sicherheitskette "Stopp" ausgelöst und in Folge dessen die Maschine, zumindest aber die potentiell gefährlichen Maschinenteile 1 angehalten. Es können auch akustische oder optische Warnsignale abgegeben werden.

Wenn das Produkt 9 eine Höhe von weniger als 1.800 mm hat, dann werden die Rasterfelder oberhalb des Produkts 9 in entsprechender Weise geprüft. Dabei ist das Rastermaß in vertikaler Richtung bei diesem Beispiel gleich 300 mm.

Die Arbeitsweise des zweiten Lasers 15 ist entsprechend. Sie wird anhand der Figur 3 kurz erläutert.

Schutzbereiche sind die Felder der Raster in denen sich kein Objekt befinden darf. Siehe zum Beispiel die Fläche 18 in den Figuren 2 und 4.

In der Figur 3 sind nur innerhalb eines rechteckigen vom zweiten Laser 15 überwachten Bereichs 20 (mit Z = 0 bis Z = 1.500 mmm) Rasterlinien eingetragen. Es reicht für die Durchführung des erfindungsgemäßen Verfahrens aus, wenn der Bereich 20 und nicht die gesamte Horizontalebene 17 mit einem virtuellen Raster bzw. Rasterlinien versehen wird. In der Figur 3 ist der Schutzbereich des zweiten Lasers 15 die rechts des Produkts 9 befindliche Teilfläche des überwachten Bereichs 20 (mit Z = 2.510 bis Z = 5.960 mmm).

Der nicht gerasterte Bereich der Horizontalebene 17 (Z > 1.500 mm) wird auch als Überwachungsfläche bezeichnet und kann zu anderen Zwecken genutzt werden. So können die Länge und die Breite des Produkts 9 von dem zweiten Laser 15 erfasst werden, während das Produkt 9 von der nicht dargestellten Produktionsanlage kommend sich in Förderrichtung 29 dem offenen Bereich 7 bzw. der Vertikalebene 13 nähert.

Es kann auch unmittelbar der Gefährdungsbereich 19 (siehe Fig. 1) überprüft werden, bevor ein neues Produkt aus der Produktionsanlage in den Gefährdungsbereich 19 gelangt. Dadurch kann der Gefährdungsbereich früher freigegeben werden und die Taktzeit für das sichere Ausschleusen eines Produkts 9 verringert werden.

Der vom zweiten Laser 15 überwachte Bereich 20 ist in Richtung der Y-Achse ebenfalls mit einem Raster von 230 mm versehen worden. Die in Förderrichtung 29 gesehen linke Seitenwand des Produkts 9 passiert in dem dargestellten Beispiel den offenen Bereich 7 in dem Rasterfeld zwischen Y = 2510 mm und Y = 2740 mm.

In einer Plausibilitätsprüfung wird geprüft, ob in diesem Rasterfeld vom zweiten Laser 15 ein Objekt, nämlich das Produkt 9, erkannt wird. Wenn das der Fall ist, ist das Ergebnis der Plausibilitätsprüfung wie erwartet, d. h. positiv.

Wenn der zweite Laser 15 zeitgleich mit der "korrekten" Außenkontur 9 in dem Bereich Y < 2510 mm ein weiteres Objekt erfasst, dann ist das Ergebnis der Plausibilitätsprüfung negativ. Dabei ist es unerheblich, ob das vom Laser 1 erfasste Objekt eine Person, ein Gegenstand oder das Produkt 9 ist, das unbeabsichtigter Weise auf dem Förderband verrutscht ist.

Ein negatives Ergebnis der Plausibilitätsprüfung stellt sich auch dann ein, wenn die in Förderrichtung 29 linke Seitenwand des Produkts 9 den offenen Bereich 7 zu weit nach rechts (d. h. bei Y >2740 mm) passiert.

Immer wenn das Ergebnis der Plausibilitätsprüfung negativ ist, wird die Sicherheitskette "Stopp" ausgelöst. In Folge dessen werden die erforderlichen Maßnahmen, wie zum Beispiel ein Stopp der Produktionseinrichtung, die Ausgabe akustischer und/oder visueller Alarmsignale, automatisch veranlasst.

Wenn innerhalb des Rasterfelds Y = 2510 mm bis Y = 2740 mm vom zweiten Laser 15 kein Gegenstand erkannt wird, dann ist etwas nicht in Ordnung und das Ergebnis der Plausibilitätsprüfung ist negativ. Dann wird ein Signal "Gefährdung" ausgelöst mit den oben beschriebenen Folgen.

Voraussetzung für diese erfindungsgemäße Überwachung ist lediglich, dass das Überwachungssystem die Hauptabmessungen des Produkts 9 kennt. Diese können auf verschiedene Weisen erfasst und dem erfindungsgemäßen Überwachungssystem zur Verfügung gestellt werden. Daher ist das erfindungsgemäße Überwachungssystem sehr flexibel; die Änderung der Abmessungen des Produkts 9 erfordern keine Änderungen bei den sicherheitsrelevanten Lasern 11 und 15 und der Überwachungseinrichtung.

Der erste Laser 11 und der zweite Laser 15 haben jeweils eigene Koordinaten in Richtung der Y-Achse.

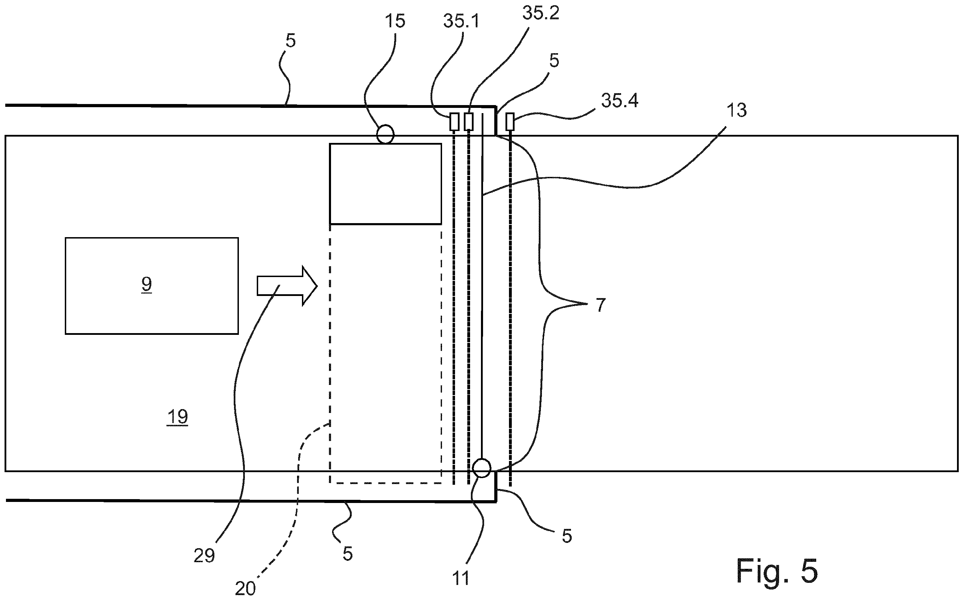

Anhand der Figuren 5, 6 und 7 wird der zeitliche Ablauf des erfindungsgemäßen Verfahrens in verschiedenen Schritten anhand einer Ansicht von oben auf den Gefährdungsbereich 19 dargestellt. Das Produkt hat das Bezugszeichen 9 und die Förderrichtung ist durch einen Pfeil 29 angedeutet. Die Förderrichtung ist die Bewegungsrichtung des Produkts 9, das aus der Produktionsmaschine (nicht dargestellt) kommt, durch den Gefährdungsbereich und den offenen Bereich 7 in die Umgebung.

In der Figur 5 ist gut zu erkennen, dass der Gefährdungsbereich 19 an beiden Seiten durch Schutzzäune 5 von der Umgebung abgetrennt ist. Zwischen den beiden Schutzzäunen 5 an dem in Förderrichtung 29 gesehen hinteren Ende des Gefährdungsbereichs 19 ist der offene Bereich 7. Der offene Bereich 7 wird durch den ersten und den zweiten Laser 11, 15 in der zuvor beschriebenen Weise überwacht.

Der von dem zweiten Laser 15 überwachte rechteckige Bereich 20 (siehe auch Figur 3) ist in der Figur 5 ebenfalls eingetragen.

Im oberen Teil der Figur 5 ist - in Förderrichtung 29 gesehen - hinter dem von dem zweiten Laser 15 erfassten Bereich 20 die vom ersten Laser 11 erfasste vertikale Ebene 13 als Linie dargestellt.

In Ergänzung zu den Lasern 11, 15 können noch ein oder mehrere Lichtschranken 35 vorgesehen sein. In dem dargestellten Ausführungsbeispiel sind die Lichtschranken vorgesehen.

Die Lichtschranken 35.1 und 35.2 befinden sich innerhalb des Gefährdungsbereichs 19, während die Lichtschranke 35.4 außerhalb des Gefährdungsbereichs 19 angeordnet ist. In der Figur 5 befindet sich das Produkt 9 im Gefährdungsbereich 19, aber noch außerhalb des von dem zweiten Laser 15 überwachten Bereichs 20, außerhalb der von den Lichtschranken 35.1, 35.2 und 35.4 überwachten Bereiche sowie außerhalb der vom ersten Laser 11 überwachten Vertikalebene 13. Das erfindungsgemäße Verfahren kann auch ohne die Lichtschranken 35 durchgeführt werden.

Die Hauptabmessungen des Produkts 9 sind der erfindungsgemäßen Überwachungseinrichtung bekannt. Die Hauptabmessungen können entweder durch separate Messvorrichtungen erfasst werden. Es ist aber auch möglich, mit Hilfe des zweiten Lasers 15 diese Hauptabmessungen des Produkts 9 ausreichend genau zu erfassen. Sie können auch über eine Schnittstelle zu der vorgelagerten Produktionseinrichtung importiert werden.

Wenn das Produkt 9 von links nach rechts durch den Gefährdungsbereich 19 gefördert wird, gelangt es zunächst in den Überwachungsbereich 20 des zweiten Lasers 15. Da die Abmessungen des Produkts 9 in der Überwachungseinrichtung hinterlegt sind, bzw. an diese übermittelt wurden, kann die erfindungsgemäße Überwachungseinrichtung ermitteln, innerhalb welches Rasterfelds die linke Seite des Produkts 9 in den vom zweiten Laser 15 überwachten Bereich 20 den offenen Bereich passieren wird. Entsprechendes gilt auch bezüglich des ersten Lasers 11. Die Arbeitsweise der Laser 11 und 15 wurde anhand der Figuren 2 bis 4 erläutert, so dass zur Vermeidung von Wiederholungen darauf verwiesen wird.

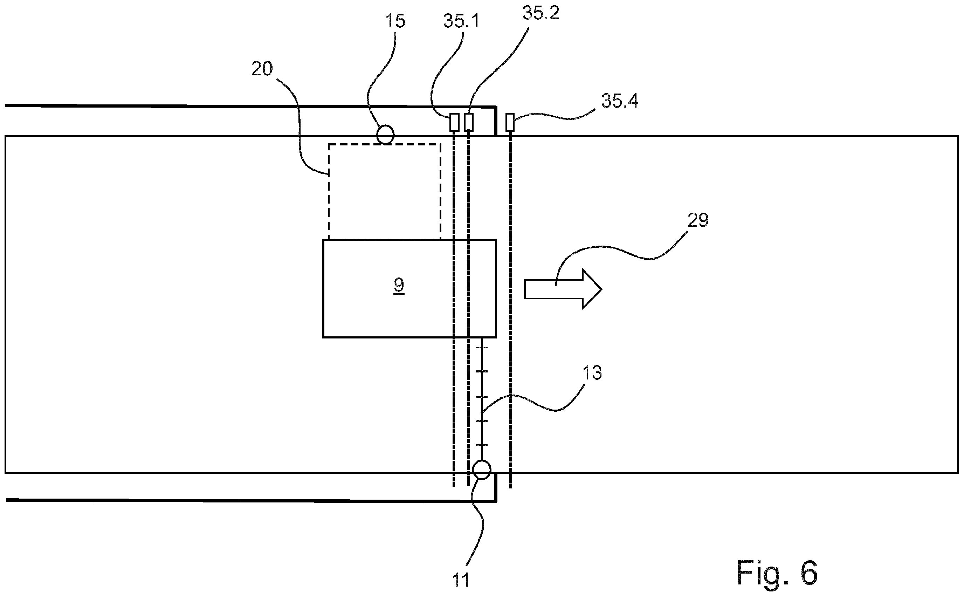

In der Figur 6 ist die Situation dargestellt, dass das Produkt sich in dem vom zweiten Laser 15 überwachten Bereich 20 befindet und die vom ersten Laser 11 überwachte Vertikalebene 13 passiert.

Wenn der zweite Laser 15 das Produkt 9 erkennt, dann ist bekannt in welchem Rasterfeld des Bereichs 20 die in Förderrichtung 29 linke Seitenwand des Produkts 9 den offenen Bereich 7 passieren wird. Unter Berücksichtigung der bekannten Breite des Produkts 9 kann die Überwachungseinrichtung daraus berechnen, wo (d. h. in welchem Rasterfeld) in der vertikalen Ebene 13 die rechte Kante des Produkts 9 den offenen Bereich 7 passieren wird.

In der Figur 6 sind die Rasterlinien der vertikalen Ebene als kurze Striche dargestellt. Zwischen den ersten fünf Rasterlinien ist das Produkt 9 nicht zu erwarten. Im sechsten Rasterfeld muss, bei einem störungsfreien Ablauf, die rechte Seite des Produkts 9 die vertikale Ebene 13 passieren.

Die Erkennung eines Objekts außerhalb des Bereichs 20 durch den ersten Laser 1 erfolgt wie anhand der Figur 4 erläutert.

Daraus wird deutlich, dass das erfindungsgemäße Verfahren eine lückenlose Überwachung der Bereiche rechts und links des Produkts 9 durch den zweiten Laser 15 (in Förderrichtung links des Produkts 9) und durch den ersten Laser 11 (in Förderrichtung rechts des Produkts 9 und oberhalb des Produkts 9) erfolgt.

Diese Überwachung ist lückenlos, sie genügt den gesetzlichen Bestimmungen (Maschinenrichtlinie, EN-ISO... ) und adaptiert sich an wechselnde Abmessungen des Produkts 9; dazu ist lediglich die Übermittlung der Hauptabmessungen an die Überwachungseinrichtung oder die Erfassung von Länge und Breite durch den zweiten Laser 15 erforderlich.

Die optionalen Lichtschranken 35.1, 35.2 und 35.4 können dazu dienen, die Bewegungsrichtung und/oder Geschwindigkeit des Produkts 9 zu erkennen. Die Bewegungsrichtung kann z.B. dadurch ermittelt werden, dass zuerst die Lichtschranke 35.1 und kurz darauf die Lichtschranke 35.2 anspricht, wenn sich das Produkt 9 in Förderrichtung 29 in Richtung des offenen Bereichs 7 bewegt. Aus dem bekannten Abstand der Lichtschranken 35.1 und 35.2 und dem Zeitunterschied des Ansprechens kann daraus auch die Fördergeschwindigkeit ermittelt werden.

Wenn eine Person von außen in den Gefährdungsbereich 19 eindringen will, dann wird das von mindestens einem der Laser 11, 15 bzw. der Überwachungseinrichtung erkannt und ein Stopp der Produktionsanlage ausgelöst.

Aus der Fördergeschwindigkeit und der bekannten Länge des Produkts kann auch die Zeit ermittelt werden, die das Produkt 9 benötigt, um den offenen Bereich 7 inklusive der letzten Lichtschranke 35.4 zu verlassen.

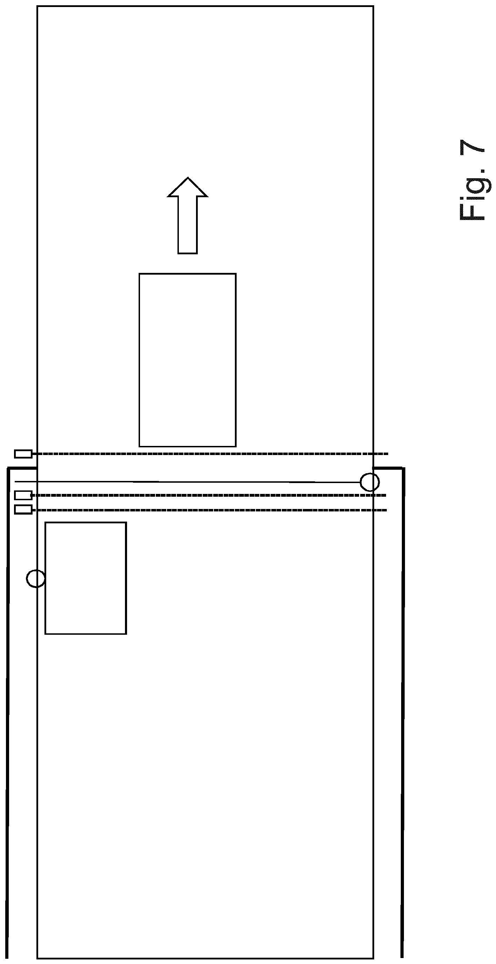

In der Figur 7 ist das Produkt 9 vollständig aus dem Gefährdungsbereich 19 hinausbefördert worden, so dass sich in der von dem zweiten Laser 15 überwachten horizontalen Ebene, in der vom ersten Laser 11 überwachten vertikalen Ebene 13 und den von den optionalen Lichtschranken 35.1, 35.2 und 35.4 überwachten Ebenen/Bereichen kein Gegenstand befindet.

Um die Zykluszeit für das Ausschleusen zu verringern kann vorgesehen sein, dass der zweite Laser 15 nicht nur den Bereich 20 überwacht. In erfindungsgemäßer Weiterbildung des Verfahrens kann der zweite Laser 15 auch den Rest des Gefährdungsbereichs 19 bzw. der Horizontalebene 17 (siehe Figur 3) überwachen. Dieser "Rest" ist in Figur 3 die Fläche 17 abzüglich des Bereichs 20 und wird nachfolgend als Überwachungsfläche bezeichnet.

Die Überwachungsfläche wird fortlaufend überwacht, während ein Produkt 9 den offenen Bereich 7 passiert. Die Überwachung der Überwachungsfläche 17 besteht aus dem Vergleich eines in der Überwachungseinrichtung hinterlegten "Bilds" der Überwachungsfläche mit den aktuellen Ergebnissen des zweiten Lasers 15.

Zum Zeitpunkt zu dem das in der Überwachungseinrichtung hinterlegte Bild gemacht wurde, befand sich kein unerwünschtes Objekt in der Überwachungsfläche.

Wenn sich kein unerwünschtes Objekt in der Überwachungsfläche 17 befindet, während sie von dem zweiten Laser 15 überwacht wird, dann weisen das hinterlegte Bild und die aktuellen Ergebnisse des Lasers 15 keine Unterschiede auf. Wenn sich ein unerwünschtes Objekt in der Überwachungsfläche befindet, während sie von dem zweiten Laser 15 überwacht wird, dann weisen das hinterlegte Bild und die aktuellen Ergebnisse des Lasers 15 Unterschiede auf. Somit kann man sehr einfach detektieren, ob der Gefährdungsbereich 19 frei von unerwünschten Objekten ist oder nicht. Wenn das der Fall ist, kann das erfindungsgemäße Verfahren von neuem gestartet werden.

### Bezugszeichenliste

1 sich bewegende Maschinenteile
3 Person
5 Schutzgitter
7 offener Bereich
9 Produkt
11 erster Laser
13 Vertikalebene
15 zweiter Laser
17 Horizontalebene
18 erster Teilbereich (die für den ersten Laser 11 sichtbaren Felder des Rasters der vertikale Ebene 13)
19 Gefährdungsbereich
20 vom zweiten Laser überwachter Bereich (in der Horizontalebene 17)
21 "blinder Bereich" des ersten Lasers
25 "blinder Bereich 25" des zweiten Lasers 15
29 Förderrichtung
35 Lichtschranke

## Patentansprüche

1. Vorrichtung zur Überwachung eines offenen Bereichs (7) umfassend einen ersten Laser (11) und einen zweiten Laser (15), wobei der erste Laser (11) so ausgerichtet und eingestellt ist, dass er einen Bereich (18) einer ersten Ebene (13) überwacht, wobei die erste Ebene (13) parallel zu dem offenen Bereich (7) verläuft, und wobei der zweite Laser (15) so ausgerichtet und eingestellt ist, dass er einen Bereich (20) einer zweiten Ebene (17) überwacht, **dadurch gekennzeichnet, dass** der erste Laser (11) an einem Ende des offenen Bereichs (7) angeordnet ist, dass der zweite Laser (15) an einem anderen Ende des offenen Bereichs (7) angeordnet ist, und dass die zweite Ebene (17) orthogonal zu der ersten Ebene (13) verläuft.

2. Vorrichtung nach Anspruch 1, **dadurch gekennzeichnet, dass** sie so ausgebildet und eingerichtet ist, dass sie die erste Ebene (13) in ein Raster mit vertikalen und horizontalen Rasterlinien unterteilt.

3. Vorrichtung nach Anspruch 1 oder 2, **dadurch gekennzeichnet, dass** sie so ausgebildet und eingerichtet ist, dass sie die zweite Ebene (17) in ein Raster mit horizontalen Rasterlinien unterteilt, und dass die horizontalen Rasterlinien orthogonal zu dem offenen Bereich (7) bzw. parallel zu einer Förderrichtung (29) verlaufen.

4. Vorrichtung nach einem der vorhergehenden Ansprüche, **dadurch gekennzeichnet, dass** sie eine Schnittstelle zu einer Produktionseinrichtung und/oder zu einer externen Messeinrichtung hat.

5. Vorrichtung nach einem der vorhergehenden Ansprüche, **dadurch gekennzeichnet, dass** sie eine oder mehrere Lichtschranken (35) aufweist.

6. Vorrichtung nach einem der vorhergehenden Ansprüche, **dadurch gekennzeichnet, dass** die Lichtschranken (35, 35.1, 35.2, 35. 4) - in einer Förderrichtung (29) des Produkts (9) (19) gesehen - hintereinander angeordnet sind.

7. Vorrichtung nach einem der vorhergehenden Ansprüche, **dadurch gekennzeichnet, dass** sie nach einem Verfahren gemäß einem der Ansprüche 8 ff arbeitet.

8. Verfahren zur Überwachung eines offenen Bereichs (7) mit Hilfe eines ersten Lasers (11) und eines zweiten Lasers (15), wobei die Laser (11, 15) an gegenüberliegenden Enden des offenen Bereichs (7) angeordnet sind, wobei der erste Laser (11) eine erste Ebene (13) überwacht, wobei die erste Ebene (13) parallel zu dem offenen Bereich (7) verläuft, wobei der zweite Laser (15) so ausgerichtet und eingestellt ist, dass er einen Bereich (20) einer zweiten Ebene (17) überwacht, und wobei die zweite Ebene (17) orthogonal zu der ersten Ebene (13) verläuft, umfassend die folgenden Verfahrensschritte:
- Unterteilen der ersten Ebene (13) in ein Raster mit vertikalen und horizontalen Rasterlinien,
- Unterteilen der zweiten Ebene (17) in ein Raster mit horizontalen Rasterlinien, wobei die horizontalen Rasterlinien orthogonal zu dem offenen Bereich (7) verlaufen,
- Ermitteln der Schutzbereiche (18, 20) für den ersten und den zweiten Laser (11, 15) in Abhängigkeit der Produktabmessungen (101) eines Produkts, das den offenen Bereich (7) passiert,
- Ermitteln, ob eine Schutzbereichs-Verletzung vorliegt, und
- Auslösen der Sicherheitskette "Stopp", wenn eine Schutzbereichs-Verletzung vorliegt.

9. Verfahren nach Anspruch 8, **dadurch gekennzeichnet, dass** überwacht wird, ob das Produkt (9) innerhalb vorgegebener Grenzen die Schutzbereiche (18, 20) passiert und dass andernfalls die Sicherheitskette "Stopp" ausgelöst wird.

10. Verfahren nach Anspruch 8 oder 9, **dadurch gekennzeichnet, dass** mindestens eine Zeit für die Durchführung eines oder mehrere Verfahrensschritte überwacht werden, und dass bei Überschreiten eines vorgegebenen Grenzwerts die Sicherheitskette "Stopp" ausgelöst wird.

11. Verfahren nach einem der Ansprüche 8 bis 10, **dadurch gekennzeichnet, dass** die Produktabmessungen (101) durch Datenübertragung von einer Produktionseinrichtung, einer externen Messeinrichtung, den ersten Laser (11) und/oder den zweiten Laser (15) bereitgestellt werden.

## Claims

1. Device for monitoring an open region (7), comprising a first laser (11) and a second laser (15), the first laser (11) being oriented and set such that it monitors a region (18) of a first plane (13), the first plane (13) extending parallel to the open region (7), and the second laser (15) being oriented and set such that it monitors a region (20) of a second plane (17), **characterized in that** the first laser (11) is arranged at one end of the open region (7), **in that** the second laser (15) is arranged at another end of the open region (7), **and in that** the second plane (17) extends orthogonally to the first plane (13).

2. Device according to claim 1, **characterized in that** it is designed and arranged such that it divides the first plane (13) into a grid comprising vertical and horizontal grid lines.

3. Device according to claim 1 or 2, **characterized in that** it is designed and arranged such that it divides the second plane (17) into a grid comprising horizontal grid lines, **and in that** the horizontal grid lines extend orthogonally to the open region (7) and parallel to a conveying direction (29).

4. Device according to any of the preceding claims, **characterized in that** it has an interface to a production apparatus and/or to an external measuring apparatus.

5. Device according to any of the preceding claims, **characterized in that** it has one or more light barriers (35).

6. Device according to any of the preceding claims, **characterized in that** the light barriers (35, 35.1, 35.2, 35. 4) are arranged - seen in a conveying direction (29) of the product (9) (19) - one behind the other.

7. Device according to any of the preceding claims, **characterized in that** it operates according to a method according to one of claims 8 ff.

8. Method for monitoring an open region (7) with the aid of a first laser (11) and a second laser (15), wherein the lasers (11, 15) are arranged at opposite ends of the open region (7), wherein the first laser (11) monitors a first plane (13), wherein the first plane (13) extends parallel to the open region (7), wherein the second laser (15) is oriented and set such that it monitors a region (20) of a second plane (17), and wherein the second plane (17) extends orthogonally to the first plane (13), the method comprising the following method steps:
- dividing the first plane (13) into a grid comprising vertical and horizontal grid lines,
- dividing the second plane (17) into a grid comprising horizontal grid lines, wherein the horizontal grid lines extend orthogonally to the open region (7),
- determining the protection regions (18, 20) for the first laser and the second laser (11, 15) depending on the product dimensions (101) of a product passing through the open region (7),
- determining whether a protection region violation takes place, and
- triggering the "stop" safety chain if a protection region violation takes place.

9. Method according to claim 8, **characterized in that** it is monitored whether the product (9) passes through the protective regions (18, 20) within predetermined limits **and in that** if this is not the case, the "stop" safety chain is triggered.

10. Method according to claim 8 or 9, **characterized in that** at least one time for performing one or more method steps is monitored, **and in that,** when a predetermined limit value is exceeded, the "stop" safety chain is triggered.

11. Method according to any of claims 8 to 10, **characterized in that** the product dimensions (101) are provided by data transmission from a production apparatus, an external measuring apparatus, the first laser (11) and/or the second laser (15).

## Revendications

1. Dispositif pour la surveillance d'une zone ouverte (7) comprenant un premier laser (11) et un deuxième laser (15), dans lequel le premier laser (11) est orienté et réglé de sorte qu'il surveille une zone (18) d'un premier plan (13), dans lequel le premier plan (13) s'étend parallèlement à la zone ouverte (7), et dans lequel le deuxième laser (15) est orienté et réglé de sorte qu'il surveille une zone (20) d'un deuxième plan (17), **caractérisé en ce que** le premier laser (11) est disposé sur une extrémité de la zone ouverte (7), que le deuxième laser (15) est disposé sur une autre extrémité de la zone ouverte (7), et que le deuxième plan (17) s'étend perpendiculairement au premier plan (13).

2. Dispositif selon la revendication 1, **caractérisé en ce qu'**il est réalisé et conçu de sorte qu'il divise le premier plan (13) en un quadrillage avec des lignes de quadrillage verticales et horizontales.

3. Dispositif selon la revendication 1 ou 2, **caractérisé en ce qu'**il est réalisé et conçu de sorte qu'il divise le deuxième plan (17) en un quadrillage avec des lignes de quadrillage horizontales, et que les lignes de quadrillage horizontales s'étendent perpendiculairement à la zone ouverte (7) ou parallèlement à une direction de transport (29).

4. Dispositif selon l'une quelconque des revendications précédentes, **caractérisé en ce qu'**il a une interface avec un système de production et/ou avec un système de mesure externe.

5. Dispositif selon l'une quelconque des revendications précédentes, **caractérisé en ce qu'**il présente une ou plusieurs barrières lumineuses (35).

6. Dispositif selon l'une quelconque des revendications précédentes, **caractérisé en ce que** les barrières lumineuses (35, 35.1, 35.2, 35.4) sont disposées les unes derrière les autres - vues dans une direction de transport (29) du produit (9) (19).

7. Dispositif selon l'une quelconque des revendications précédentes, **caractérisé en ce qu'**il fonctionne selon un procédé selon l'une quelconque des revendications 8 et suivantes.

8. Procédé pour la surveillance d'une zone ouverte (7) à l'aide d'un premier laser (11) et d'un deuxième laser (15), dans lequel les laser (11, 15) sont disposés sur les extrémités opposées de la zone ouverte (7), dans lequel le premier laser (11) surveille un premier plan (13), dans lequel le premier plan (13) s'étend parallèlement à la zone ouverte (7), dans lequel le deuxième laser (15) est orienté et réglé de sorte qu'il surveille une zone (20) d'un deuxième plan (17), et dans lequel le deuxième plan (17) s'étend perpendiculairement au premier plan (13), comprenant les étapes de procédé suivantes :
- la division du premier plan (13) en un quadrillage avec des lignes de quadrillage verticales et horizontales,
- la division du deuxième plan (17) en un quadrillage avec des lignes de quadrillage horizontales, dans lequel les lignes de quadrillage horizontales s'étendent perpendiculairement à la zone ouverte (7),
- la détermination des zones de protection (18, 20) pour le premier et le deuxième laser (11, 15) en fonction des dimensions de produit (101) d'un produit, qui passe par la zone ouverte (7),
- le fait de déterminer si une violation de la zone de protection est présente, et
- le déclenchement de la chaîne de sécurité « arrêt », lorsqu'une violation de la zone de protection est présente.

9. Procédé selon la revendication 8, **caractérisé en ce qu'**il est surveillé si le produit (9) à l'intérieur de limites prédéfinies passe par les zones de protection (18, 20) et que sinon la chaîne de sécurité « arrêt » est déclenchée.

10. Procédé selon la revendication 8 ou 9, **caractérisé en ce qu'**au moins un temps pour la mise en œuvre d'une ou plusieurs étapes de procédé est surveillé, et que lors du dépassement d'une valeur limite prédéfinie la chaîne de sécurité « arrêt » est déclenchée.

11. Procédé selon l'une quelconque des revendications 8 à 10, **caractérisé en ce que** les dimensions de produit (101) sont fournies par transmission de données à partir d'un système de production, d'un système de mesure externe, du premier laser (11) et/ou du deuxième laser (15).
